(19) Europäisches Patentamt
European Patent Office
Office européen des brevets

(11) Numéro de publication: **0 024 987**
**B1**

(12) **FASCICULE DE BREVET EUROPEEN**

(45) Date de publication du fascicule du brevet: **17.11.82**

(51) Int. Cl.³: **G 01 G 21/00**, C 22 B 3/00, C 22 B 13/04

(21) Numéro de dépôt: **80401212.8**

(22) Date de dépôt: **25.08.80**

(54) **Procédé de traitement des solutions de chlorure de plomb.**

(30) Priorité: **24.08.79 FR 7921325**

(43) Date de publication de la demande:
**11.03.81 Bulletin 81/10**

(45) Mention de la délivrance du brevet:
**17.11.82 Bulletin 82/46**

(84) Etats contractants désignés:
**AT BE CH DE FR GB IT LI LU NL SE**

(56) Documents cités:
**FR - A - 2 359 211**
**US - A - 3 755 161**

(73) Titulaire: **SOCIETE MINIERE ET METALLURGIQUE DE PENARROYA Société anonyme dite:**
**Tour Maine-Montparnasse 33, avenue du Maine**
**F-75751 Paris Cédex 15 (FR)**

(72) Inventeur: **Georgeaux, André**
**61, avenue de la Clairière**
**F-78120 Rambouillet (FR)**

(74) Mandataire: **Ricalens, François**
**B.P. 106 1, avenue Albert Einstein**
**F-78191 Trappes Cedex (FR)**

EP 0 024 987 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Procédé de traitement des solutions de chlorure de plomb

La présente invention a pour objet un procédé de traitement des solutions de chlorure de plomb contenant comme impuretés au moins un des métaux choisis dans le groupe constitué par l'argent, le cuivre et le bismuth.

Elle concerne plus particulièrement une technique d'élimination des dernières traces d'argent, de cuivre et de bismuth contenus dans les solutions de chlorure de plomb.

Au cours du dernier lustre, de nombreuses méthodes ont été proposées pour récupérer le plomb contenu dans différents matériaux plombifères tels que les minerais oxydés et sulfurés ainsi que les déchets et résidus d'usines de traitements métallurgiques, méthodes qui utilisent la solubilité relativement élevée du plomb lorsqu'il est sous forme de chlorure dans une saumure de métaux alcalins ou alcalino-terreux ou de chlorure d'ammonium.

Même lorsque le minerai est très pur, il contient toujours à l'état d'impuretés d'autres éléments dont les plus gênants sont l'argent, le cuivre et le bismuth. Ces métaux, lors de la mise en solution du plomb, se comportent en général comme ce dernier, sont également dissous et constituent des impuretés dans la solution.

Il existe d'assez nombreuses méthodes pour éliminer les impuretés du chlorure de plomb en solution. On peut citer parmi ces méthodes la cémentation à l'aide de plomb métal, la précipitation sulfurante à l'aide de galène ainsi que cela est indiqué dans la demande de brevet français N° de publ. FR—A—2 359 211 déposée par la Demanderesse et la cristallisation.

Les deux premières ne permettent pas d'obtenir des solutions de chlorure de plomb complètement débarassées de l'argent, du cuivre et du bismuth. L'efficacité de ces méthodes étant limitée par des équilibres thermo-dynamiques, il n'est pas possible de l'accroître. La cristallisation en revanche permet d'obtenir du chlorure de plomb de très haute pureté. Toutefois cette technique est fortement consommatrice d'énergie puisqu'elle implique un abaissement de plusieurs dizaines de degrés centigrades de la solution de chlorure de plomb pour précipiter ce dernier, la redissolution à chaud du chlorure de plomb précipité ainsi que le réchauffement de la solution de chlorure de plomb initiale. C'est la raison pour laquelle elle n'est utilisée à l'échelle industrielle qu'avec réticence.

C'est pourquoi un des buts de la présente invention est de fournir un procédé de purification des solutions de chlorure de plomb qui permette d'éliminer la quasi totalité de l'argent, du cuivre et du bismuth présents dans cette solution et notamment d'abaisser les rapports argent/plomb, cuivre/plomb et bismuth/plomb à une valeur inférieure à 10 parties par million (ppm).

Un auture but de la présente invention est de fournir un procédé du type ci-dessus qui ne soit pas fortement consommateur d'énergie.

Ces buts, ainsi que d'autres qui apparaîtront par la suite, sont atteints par un procédé de traitement des solutions de chlorure de plomb contenant comme impuretés au moins un des métaux choisis dans le groupe constitué par l'argent, le cuivre et le bismuth, caractérisé par le fait qu'il comporte les étapes suivantes:

a) mise en contact de la solution avec une résine échangeuse de cations dont le groupement actif est un groupement sulfhydrique;

b) récupération du plomb à partir de la solution issue de l'étape a).

Les groupements à fonction sulfhydrique peuvent être choisis parmi les groupements:

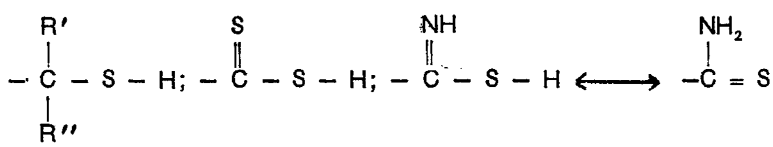

La présente invention donne de particulièrement bons résultats et est particulièrement bien adaptée aux problèmes posés par les solutions de chlorure de plomb dont la composition est indiquée dans les fourchettes suivantes:

| | Domaine usuel | Domaine prefere |
|---|---|---|
| Ions chlorure ($Cl^-$) | 4 à 6 éq.g/l | 4 à 5 éq.g/l |
| Plomb | 25 à 60 g/l | 30 à 40 g/l |
| Ions ferreux | 0 à 60 g/l | 0 à 60 g/l |
| Zinc | 0 à 30 g/l | 0 à 20 g/l |
| Argent | 0,1 à 200 mg/l | 0,1 à 100 mg/l |
| Cuivre | 0,2 à 2000 mg/l | 0,2 à 200 mg/l |
| Bismuth | 0,1 à 200 mg/l | 0,1 à 100 mg/l |
| pH | 0 à 5 | 1 à 4 |

Les groupements sulfhydriques (—S—H), ou thiols, permettent à eux seuls l'élimination complète de l'argent et du bismuth présents dans la solution tandis que l'élimination du cuivre est soumise à un autre paramètre qui est le potentiel d'oxydo-réduction de la solution. Si l'élimination du cuivre doit être totale, il faut que ce dernier soit, aussi complètement que possible, sous la forme cuivreuse. Par ailleurs, les groupements —S—H présentent l'inconvénient d'être sensibles à l'oxydation. Les solutions issues d'une lixiviation oxydante de galènes sont en particulier susceptibles de contenir des traces d'ions $Fe^{+++}$ et du cuivre bivalent. Ces deux composés, particulièrement l'ion $Fe^{+++}$, détruisent partiellement le groupement actif de la résine. Pour ces raisons, il convient avant de réaliser la purification de l'étape a) de réduire la solution pour amener l'ensemble du cuivre sous la forme cuivreuse, le potentiel apparent d'oxydo-réduction étant avantageusement inférieur ou égal à 0 et, de préférence, à 520 millivolts per rapport à l'électrode au calomel saturé, cette dernière étant dans les mêmes conditions que la solution.

Il faut toutefois que le potentiel ne soit pas trop réducteur pour éviter que la précipitation du plomb sous forme métallique ne soit trop importante.

Une telle réduction peut être réalisée en mettant la solution de chlorure de plomb en contact avec de la galène ou de préférence avec du plomb métallique. Avec ce dernier matériau, cette technique présente l'avantage d'éliminer de la solution une grande partie de l'argent, du cuivre et du bismuth sous forme de céments et donc de pouvoir purifier une plus grande quantité de solution par unité de volume de résine.

Pour obtenir un résultat meilleur encore, on peut mettre en contact la solution en cours de purification avec du plomb métallique, de quelque manière que ce soit, et maintenir ainsi le potentiel de la solution pendant toute l'étape a) à une valeur comprise par exemple entre —520 et —560 millivolts par rapport à l'électrode au calomel saturé à 60°C.

La réduction peut être également réalisée par voie électrolytique.

La température de la solution pendant l'étape a) est de préférence comprise entre 60°C et la température d'ébullition.

Pour des raisons d'ordre pratique, la pression choisie est de préférence la pression atmosphérique. Toutefois, dans certains cas, des pressions supérieures ou inférieures à la pression atmosphérique pourront être utilisées sans que les performances du procédé n'en soient altérées.

Les résines utilisées au cours de l'étape a) peuvent être par exemple la résine vendue sous la dénomination commerciale Imacti GT 73 par la Société Imacti et la résine vendue sous la dénomination commerciale Lewatit OC 1014 par la Société Bayer. Ces deux résines ont comme groupement actif le groupement sulfhydrique (—S—H).

Les solutions obtenues après l'étape a) du procédé selon la présente invention ont une teneur en argent, en cuivre et en bismuth inférieure à la limite de détection analytique, c'est-à-dire respectivement inférieures à 0,1, 0,2 et 0,1 milligramme par litre.

Une fois la solution purifiée, on peut en récupérer le plomb selon toutes les techniques déjà connues, par exemple en précipitant son sel, en le réduisant à l'état métallique de manière chimique ou en le cémentant. Toutefois, un des grands avantages de la purification selon la présente invention est de permettre l'obtention directe de plomb de haute pureté par électrolyse de la solution. Une telle électrolyse conduit à la précipitation du plomb dont la pureté peut aisément atteindre 99,95% et contenant au plus 15 ppm de cuivre, 10 ppm d'argent et 20 ppm de bismuth, l'électrolyse ayant tendance à élever les rapports entre les impuretés et le plomb.

Les résines une fois chargées en argent, cuivre et/ou bismuth peuvent être régénérées de la manière suivante:

c) élution de la résine chargée en impuretés par une solution d'acide chlorhydrique dont la normalité est comprise entre 5 et 12 N et de préférence voisine de 8 N.

Lorsque les groupements actifs sont altérés par oxydation on peut les régénérer au moyen d'une solution de sulfure de sodium.

Les exemples non limitatifs suivants ont pour but de mettre les spécialistes à même de déterminer aisément les conditions opératoires qu'il convient d'utiliser dans chaque cas particulier.

### Exemple 1

On prépare une solution ne contenant que des chlorures, de composition suivante:

| | |
|---|---|
| NaCl | 250 g/l |
| $Pb^{2+}$ | 30 g/l |
| $Fe^{2+}$ | 20 g/l |
| $Bi^{3+}$ | 50 g/l |
| $Ag^{+}$ | 10 mg/l |
| $Cu^{+}$ | 10 mg/l |

Cette solution est portée à la température de 90°C et passée en continu dans deux colonnes en série.

— La première colonne contient des tournures de plomb; elle réalise une première purification par cémentation du cuivre, de l'argent et du bismuth. En sortie de cette colonne la solution contient moins de 0,1 mg/l de bismuth et d'argent, mais encore 1 mg/l de cuivre.

— La deuxième colonne contient la résine échangeuse d'ions vendue sous la marque déposée Lewatit OC 1014. En sortie de cette deuxième colonne, la teneur en cuivre, argent et bismuth est inférieure à la limite de détection analytique spécifiée plus haut, le rapport massique entre ces impuretés et le plomb étant respectivement à 7, 3 et 3 ppm. On passe un débit de 10 fois le volume apparent du lit de resine/heure pendant 50 heures sans observer de fuite de cuivre dans la solution.

Il importe toutefois que la solution ne soit pas réoxydée entre les deux colonnes. On a ainsi observé que lorsque de l'air restait dans le filtre situé entre les deux colonnes, la purification obtenue par la résine était bien moins bonne. On peut en conclure que la résine fixe l'ion cuivrique bien moins que l'ion cuivreux; l'association de la cémentation sur le plomb et du passage sur résine à groupements —S—H apparaît ainsi comme une méthode extrêmement efficace pour éliminer le cuivre d'une solution contenant du plomb.

### Exemple 2
#### Purification

La solution issue d'une attaque réalisée selon la technique décrite dans la demande de brevet français n° 76—22.138, publiée sous le numéro 2.359.211, est traitée dans une installation comprenant:

— un bac de stockage de la solution issue de l'attaque;

— un réacteur de cémentation. Ce réacteur cylindrique est constitué de deux parties superposées, séparées par une cloison inclinée en forme d'entonnoir. La solution d'attaque impure est admise dans le compartiment inférieur où de la poudre électrolytique de plomb est maintenue en suspension, provoquant la cémentation des métaux nobles. La solution grossièrement purifiée est soutirée par un système de trop-plein, dans la partie supérieure, non agitée, sans entraînement important de solide. Les deux compartiments du réacteur ont un volume sensiblement égal à 0,85 litre;

— une colonne thermostatée à 90°C garnie de résine échangeuse d'ions vendue sous la marque déposée Imacti GT 73. La solution issue du réacteur de cémentation est introduite à la base de cette colonne, après clarification.

Les paramètres opératoires de la purification sont:

Débit d'alimentation: 0,85 litre/heure
Volume de chaque compartiment réacteur cémentation: 0,85 litre
Volume de résine dans la colonne: 0,085 litre
Volume de solution traité: 30 litres.

Les différentes phases produites au cours de l'opération de purification répondent à l'analyse chimique suivante:

| Elément | Pb g/l | Cu mg/l | Ag mg/l |
|---|---|---|---|
| Solution initiale | 30,0 | 60 | 0,9 |
| Solution issue de la cémentation | 30,0 | 0,8 | 0,1 |
| Solution passée sur résine | 30,0 | 0,2 | 0,1 |

La solution purifiée à l'étape précédente est ensuite traitée dans une installation d'électrolyse. Cette installation comprend:

— un bac de stockage de solution purifiée

— une cellule d'électrolyse.

La solution pure de $PbCl_2$ est pompée dans le compartiment cathodique où elle est débarassée d'une partie du plomb qu'elle contient avant de traverser le diaphragme pour pénétrer dans le compartiment anodique. Après oxydation des ions $Fe^{++}$ en $Fe^{+++}$, l'anolyte est éliminé de la cuve. Le plomb formé est récupéré, dosé, puis fondu en présence de soude à 400°C. Le lingot obtenu répond à l'analyse chimique suivante:

| Element | Cu ppm | Ag ppm | Bi ppm | As ppm | Sb ppm | Zn ppm |
|---|---|---|---|---|---|---|
| Lingot | 8 | 5 | 5 | 20 | 20 | 2 |

La qualité du produit obtenu est remarquable. Seule une très légère contamination en cuivre est observée.

Exemple 3

Mise en oeuvre d'un procédé complet comprenant:

— attaque sélective du plomb dans un concentré mixte PbS, ZnS, $CuFeS_2$

— purification grossière de la solution d'attaque par cémentation à la poudre de plomb

— purification fine sur résine échangeuse d'ions

— élaboration de plomb électrolytique ultra-pur par électrolyse de la solution purifiée.

Le produit traité est un concentré mixte Pbs + Zns + $CuFeS_2$, obtenu par flottation globale des pyrites massives d'Aljustrel (Portugal). Ce produit subit les opérations successives suivantes:

a) Dissolution sélective du plomb. Dans un réacteur d'un litre on introduit conjointement en continu du concentré et une solution mixte $FeCl_2$—$FeCl_3$ en milieu NaCl. Les débits respectifs de solution et de solide sont choisis de telle façon que le chlorure ferrique soit introduit en quantité légèrement inférieure à la stoechiométrie par rapport à la quantité de galène présente dans le concentré.

Les paramètres opératoires relatifs à cette manipulation sont les suivants:

| | | |
|---|---|---|
| Débit | : | 1,19 l/h |
| Débit concentré | : | 627 g/h |
| Température | : | 90°C |
| Concentration NaCl solution | : | 250 g/l |
| Concentration $Fe^{+++}$ solution initiale | : | 9,54 g/l |
| Concentration $Fe^{++}$ solution initiale | : | 7,8 g/l |
| Concentration $Pb^{++}$ solution initiale | : | 10 g/l |
| Stoechiométrie $PbS/FeCl_3$ | : | 1,04 QS |
| (Réaction $2FeCl_3 + |PbS = PbCl_2 + 2FeCl_2 + S°$) | | |
| Durée de fonctionnement | : | 9 h 30 minutes |

Les phases entrantes et sortantes correspondant à cette expérience répondent à l'analyse chimique suivante:

| Elément | Pb % g/l | Zn % g/l | Cu % g/l | Fe total % g/l | $Fe^{+++}$ g/l | Ag % g/l | S % |
|---|---|---|---|---|---|---|---|
| Concentré initial | 3,2 | 9,5 | 2,5 | 33,0 | | 0,007 | 43,9 |
| Solution initiale | 10 | 0 | 0 | 17,3 | 9,54 | 0 | |
| Résidu d'attaque lavé | 0,27 | 10,1 | 2,68 | 36.0 | | 0,006 | 48,0 |
| Solution issue de l'attaque | 25,2 | 2,02 | 0,038 | 18,5 | 0,02 | 0,007 | |

Cette lixiviation a permis de dissoudre les éléments principaux dans les proportions suivantes:

| | | |
|---|---|---|
| Plomb | : | 92% |
| Zinc | : | 2,7% |
| Cuivre | : | 0,3% |
| Fer | : | 0,2% |
| Argent | : | 20% |

On constate que la dissolution du plomb a été très sélective vis-à-vis des autres éléments lorsque la quantité de PbS est supérieure à la stoechiométrie (de préférence comprise entre 0,01 et 1,2 fois la quantité stoechiométrique).

b) Purification de la solution plombeuse. Cette opération a été effectuée dans l'appareillage décrit dans l'exemple 2 comprenant un réacteur de cémentation à deux compartiments et une colonne de résine échangeuse d'ions.

Les paramètres opératoires concernant la purification en deux stades sont les suivants:

| | | |
|---|---|---|
| Débit alimentation | : | 0,85 l/h |
| Volume réacteur cémentation — partie turbulente | : | 0,85 l |
| — partie calme | : | 0,85 l |
| Volume du lit de résine | : | 0,085 l |

Au cours de la purification les impuretés éliminées se sont réparties de la manière suivante:

| Phase concernée | % répartition | | |
|---|---|---|---|
| | Cuivre | Argent | Bismuth |
| Cément | 92 | 91 | 58 |
| Résine | 8 | 9 | 42 |

c) Electrolyse de la solution issue de la résine. Cette opération a été effectuée dans l'installation et dans les conditions décrites à l'exemple 2. La solution issue de la colonne de résine est dirigée directement dans la cuve d'électrolyse, les opérations de purification et d'électrolyse ont en effet été conduites conjointement.

Le plomb recueilli à l'issue de l'électrolyse a été lavé puis fondu à 400°C en présence de soude. Le lingot résultant présente l'analyse chimique suivante:

| Elément | Cu | Ag | Bi | Sb | As | Zn | Sn |
|---|---|---|---|---|---|---|---|
| Concentration (ppm) | 10 | 10 | 10 | 100 | 40 | 10 | 100 |

Cet exemple illustre parfaitement la possibilité de produire du plomb métallique de haute pureté à parti, d'un composé impur quelconque contenant de la galène.

Exemple 4

Elution de la résine IMACTI GT 73 par de l'acide chlorhydrique

Une série d'expériences est effectuée sur des colonnes maintenues à 90°C par une circulation d'eau chaude dans une double enveloppe.

Chaque expérience est effectuée en deux temps:

1) La résine est d'abord chargée à l'aide d'une solution synthétique de chlorure cuivreux dans du chlorure de sodium, titrant environ 5 g/l de cuivre. La résine ainsi chargée contient, selon les expériences, de 60 à 80 g/l de cuivre par litre.

2) Chacun des lots de résine est ensuite rincé à l'eau pour éliminer la solution imprégnante. L'opération d'élution est alors effectuée, avec des solutions aqueuses d'acide chlorhydrique de normalité différente selon le lot de résine.

La solution d'élution est recueillie par fraction d'un volume de lit qui sera par la suite désigné par B.V. (Bed Volume), et on procède sur chaque fraction à une détermination de la concentration en cuivre. Il est ainsi possible de déterminer le taux de cuivre élué, en fonction de la quantité de solution d'élution recueillie, et selon les différentes acidités chlorhydriques.

| Nombre cumulé de B.V. recueillis | Pourcentage cumulé de cuivre recueilli | | | |
|---|---|---|---|---|
| | Elution par HCl 3,95 N | Elution par HCl 5,8 N | Elution par HCl 6,8 N | Elution par HCl 7,6 N |
| 1 | 2,1 | 3,1% | 13,0 | 17,7 |
| 2 | 16,4 | 30,6% | 54,9 | 70,0 |
| 3 | 27,0 | 50,6% | 75,6 | 93,8 |
| 4 | 35,0 | 65,5% | 88,4 | 98,7 |
| 5 | 41,4 | 77,2% | 95,5 | |
| 6 | 46,9 | 85,9% | 97,0 | |
| 7 | 51,44 | 92,2% | | |
| 8 | 55,40 | 95,4% | | |
| 9 | 58,90 | 96,1% | | |
| 10 | 62,10 | 96,2% | | |
| 20 | 81,90 | | | |

Ces résultats montrent qu'il est difficile d'éluer la résine avec de l'acide chlorhydrique présentant une normalité inférieure ou égale à 4. En revanche, une acidité de 4 à 6 N environ permet de récupérer le cuivre avec un bon rendement à condition d'utiliser un volume important de solution. Une acidité supérieure à 6 N apparaît préférable.

**Revendications**

1. Procédé de traitement des solutions de chlorure de plomb contenant comme impuretés au moins un des métaux choisis dans le groupe constitué par l'argent, le cuivre et le bismuth, caractérisé par le fait qu'il comporte les étapes suivantes:

a) mise en contact de la solution avec une résine échangeuse de cations dont le groupement actif est un groupement sulfhydrique;

b) récupération du plomb à partir de la solution issue de l'étape a).

2. Procédé selon la revendication 1, caractérisé par le fait que tout le cuivre est réduit à l'état de Cu I avant l'étape a).

3. Procédé selon la revendication 2, caractérisé par le fait que le potentiel d'oxydo-réduction de la solution avant son passage sur résine est porté à une valeur inférieure ou égale à 0 par rapport à l'électrode au calomel saturé.

4. Procédé selon les revendications 1 à 3 prises séparément, caractérisé par le fait que le potentiel d'oxydo-réduction est porté et maintenu pendant toute la durée de l'étape a) à une valeur comprise entre −520 et −560 millivolts.

5. Procédé selon les revendications 1 à 4 prises séparément, caractérisé par le fait que la température de la solution est maintenue pendant l'étape a) à une valeur choisie entre 60°C et la température d'ébullition.

6. Procédé selon les revendications 1 à 5 prises séparément, caractérisé par le fait que l'étape b) est une électrolyse.

7. Procédé selon les revendications 1 à 6 prises séparément, caractérisé par le fait qu'il comporte en outre l'étape suivante:

c) élution de la résine chargée en impuretés par une solution d'acide chlorhydrique de 5 à 12 N.

**Claims**

1. A process for treating solutions of lead chloride containing, as impurities, at least one of the metals silver, copper and bismuth, the process comprising the following steps:

a) contacting the solution with a cation exchange resin, the active grouping of which is a sulfhydryl group; and,

b) recovering the lead from the solution resulting from said step a).

2. A process in accordance with Claim 1, in which all the copper is reduced to the CuI state prior to step a).

3. A process in accordance with Claim 2, in which the redox potential of the solution prior to its passing over the resin is brought to a value less than or equal to 0 with respect to the saturated calomel electrode.

4. A process in accordance with any of Claims 1 to 3, in which the redox potential is brought to, and maintained at during the whole duration of said step a), a value between 520 and 560 millivolts.

5. A process in accordance with any of Claims 1 to 4, in which the temperature of the solution is maintained, during step a), at a value between 60°C and boiling point.

6. A process in accordance with any of Claims 1 to 5, in which said step b) comprises an electrolysis process.

7. A process in accordance with any of Claims 1 to 6, and further comprising the following step:

c) elution of the resin loaded with impurities, using a 5 to 12 N solution of hydrochloric acid.

**Patentansprüche**

1. Verfahren zur Behandlung von Bleichloridlösungen, die als Verunreinigungen wenigstens eines der aus der von Silber, Kupfer und Wismut gebildeten Gruppe gewählten Metalle enthalten, dadurch gekennzeichnet, daß es die folgenden Schritte aufweist:

a) Kontaktierung der Lösung mit einem Kationenaustauschharz, dessen aktive Gruppe eine Schwefel-Wasserstoff-Gruppe ist;

b) Gewinnung des Bleis aus der vom Schritt a) stammenden Lösung.

2. Verfahren nach Anspruch 1, dadurch gekennzeichnet, daß alles Kupfer vor dem Schritt a) in den Cu(I)-Zustand reduziert wird.

3. Verfahren nach Anspruch 2, dadurch gekennzeichnet, daß das Oxydo-Reduktions(Redox)-Potential der Lösung vor ihrem Durchlauf über das Harz auf einen Wert unter oder gleich 0 bezüglich der gesättigten Calomelelektrode gebracht wird.

4. Verfahren nach einem der Ansprüche 1 bis 3, dadurch gekennzeichnet, daß das Oxydo-Reduktions(Redox)-Potential der Lösung auf einen Wert zwischen −520 und −560 mV gebracht und während der ganzen Dauer des Schrittes a) gehalten wird.

5. Verfahren nach einem der Ansprüche 1 bis 4, dadurch gekennzeichnet, daß die Temperatur der Lösung während des Schrittes a) auf einem zwischen 60°C und der Siedetemperatur gewählten Wert gehalten wird.

6. Verfahren nach einem der Ansprüche 1 bis 5, dadurch gekennzeichnet, daß der Schritt b) eine Elektrolyse ist.

7. Verfahren nach einem der Ansprüche 1 bis 6, dadurch gekennzeichnet, daß es außerdem den folgenden Schritt aufweist:

c) Eluierung des mit Verunreinigungen beladenen Harzes durch eine Salzsäurelösung von 5 bis 12 N.